# EUROPEAN PATENT SPECIFICATION

(11) **EP 1 939 460 B1**
(45) Date of publication and mention of the grant of the patent: **17.12.2014**
(21) Application number: 07254628.6
(22) Date of filing: 29.11.2007
(51) Int. Cl.: F04D 29/70, F02C 7/052, B64C 7/02

(54) **Intertial particle separator for compressor shroud bleed**
Trägteilchenseparator für einen Kompressorenummantelungsauslauf
Séparateur de particules inertiel pour purge de coiffe de compresseur

(30) Priority: 20.12.2006 US 642493
(43) Date of publication of application: 02.07.2008
(73) Proprietor: Hamilton Sundstrand Corporation, Windsor Locks, CT 06096 (US)
(72) Inventor: Mehring, Carsten, Aurora, Colorado 80016 (US)
(74) Representative: Tomlinson, Kerry John

(56) References cited:
- WO-A1-99/63211
- US-A- 4 860 534
- US-B1- 6 499 285

## Description

The invention relates to gas turbine engines, and more particularly to a gas turbine engine that has bleed slots arranged around its compressor shroud.

Gas turbine engines for vehicles, such as helicopters and tanks, that operate in environments with significant particle loading due to atmospheric particulates, such as dust and sand, generally have an inlet design that employs an Inertial Particle Separator (IPS).

US 6,499,285 B1 discloses a known IPS for a gas turbine engine. The IPS comprises a plurality of vanes pivotally mounted to a housing and a plurality of deflector blades mounted to the housing downstream of the vanes. The vanes turn an incoming stream of air rapidly causing the air to accelerate. However, the particles, which are more dense than air, cannot follow the curved path of the stream of air. In particular, the particle velocity lags behind the air velocity upon passing the vanes. The particles arrive at the deflector blades with only a fraction of the speed of the stream of air so that the particles impact the deflector blades at a high angle of incidence. This causes the particles to bounce off of the deflector blades. The particles then bounce back and forth between the deflector blades and the vanes, moving radially outwards, until they leave through a plurality of openings in the external housing wall to achieve particle separation.

Commercial aircraft do not generally operate in atmospheric conditions with high particle loading or concentration. Therefore, gas turbine engines for commercial aircraft, such as those employed as an auxiliary power unit (APU), generally do not include an IPS system since damage to the leading edges of their compressor blades due to ingestion of particles such as sand and dust is low.

This is true as long as the compressor ingests airflow through its impeller/inducer inlet plane. In this case, the compressor continuously accelerates the airflow towards the impeller and then directs it through the flow passages in between the rotating blades. Consequently, if particle impact with the blades takes place in this context, impact angles are shallow and/or relative impact velocity is low.

In order to increase operating range, many state-of-the-art gas turbine engines employed as an APU include an aerodynamic control feature referred to as "shroud bleed". A plurality of shroud-bleed apertures that each penetrate through the outer shroud for the compressor impeller somewhat downstream of the impeller throat allow a certain proportion of compressed air to escape from the compressor shroud and recirculate back through the engine inlet to improve the surge resistance of the compressor under heavy shaft loading conditions. This recirculated air passes through a plurality of bell-mouth apertures that penetrate a bell-mouth that couples the inlet plenum to the compressor. Under certain operating conditions, air flow may enter the compressor stage not only through the compressor inlet plane but also through the shroud-bleed apertures. Such air flow entering through the shroud-bleed apertures into the compressor passages between the impeller blades accelerates from virtually zero velocity to blade-tip velocity. Consequently, the bulk of any particles present within this reverse shroud-bleed air flow shall collide with the rotating impeller blade tips due to their inertia, thereby giving rise to blade erosion or damage.

Generally, the invention comprises an IPS for an inlet bell-mouth that couples an inlet air plenum to a compressor in a gas turbine engine, wherein the IPS removes air particles within reverse air flow passing through at least one bell-mouth aperture in the inlet bell-mouth into shroud bleed apertures in a shroud for the compressor, comprising: at least one baffle that protrudes from each bell-mouth aperture positioned to bend a reverse air flow stream through the bell-mouth aperture to a degree that forces particles out of the reverse air flow stream and into the inlet air plenum.

Preferred embodiments of the invention will now be described, by way of example only, and with reference to the accompanying drawings in which:
Figure 1 is a partial cut-away side view of a typical gas turbine engine that has an inlet plenum coupled to a compressor by way of an inlet bell-mouth according to the prior art.
Figure 2 is an end view of the inlet bell-mouth that couples the inlet plenum to the compressor for the gas turbine engine shown in Figure 1 according to the prior art.
Figure 3 is a partial cut-away side view of a gas turbine engine that has an inlet plenum coupled to a compressor by way of an inlet bell-mouth according to a first possible embodiment of the invention.
Figure 4 is an end view of the inlet bell-mouth that couples the inlet plenum to the compressor for the gas turbine engine shown in Figure 3 according to a first possible embodiment of the invention.
Figure 5 is a partial cut-away side view of the inlet bell-mouth that couples the inlet plenum to the compressor for the gas turbine engine shown in Figure 3 that shows a bell-mouth aperture for the inlet bell-mouth according to a first possible embodiment of the invention.
Figure 6 is a partial cut-away side view of a gas turbine engine that has an inlet plenum coupled to a compressor by way of an inlet bell-mouth according to a second possible embodiment of the invention.
Figure 7 is a partial cut-away side view of the inlet bell-mouth that couples the inlet plenum to the compressor for the gas turbine engine shown in Figure 6 that shows a bell-mouth aperture for the inlet bell-mouth according to a second possible embodiment of the invention.

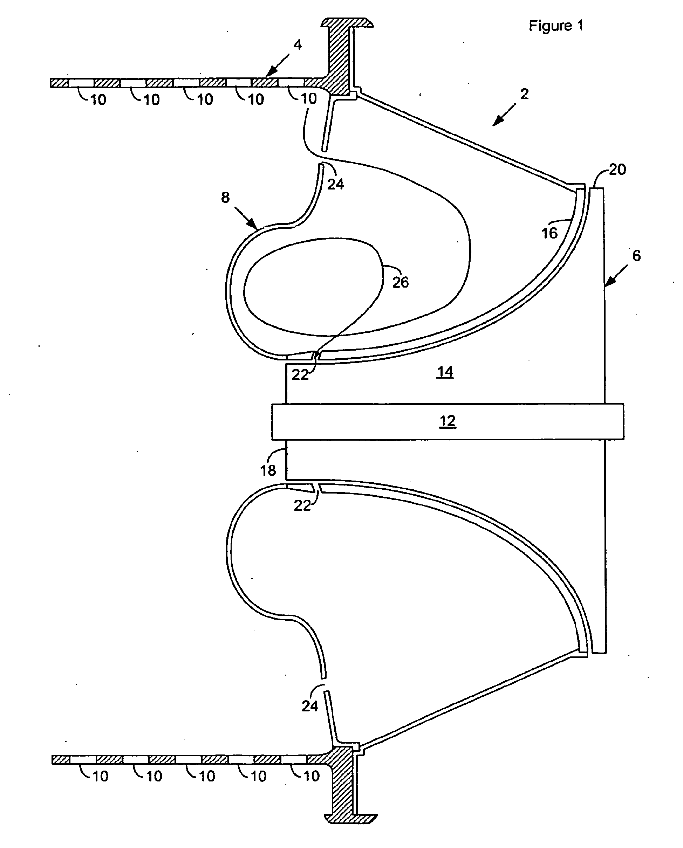

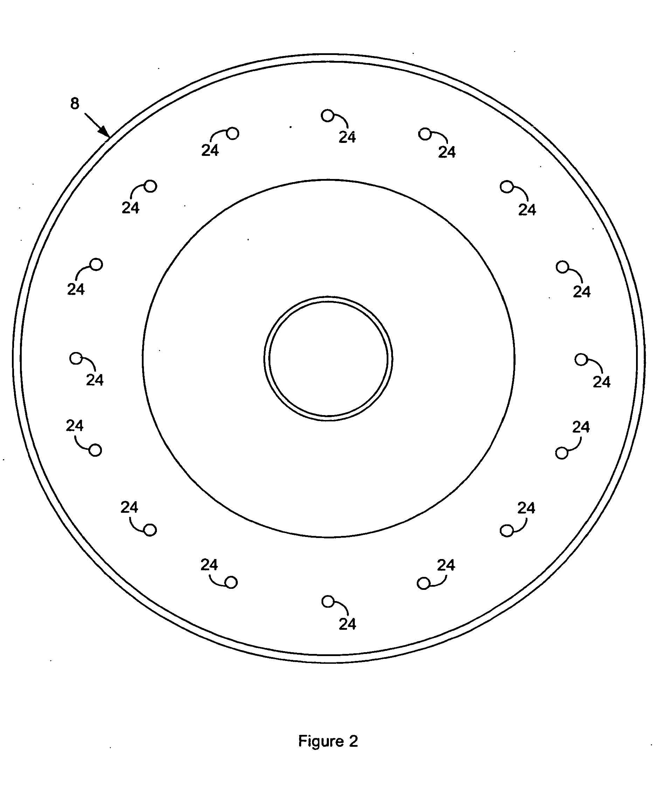

Figure 1 is a partial cut-away side view of a typical gas turbine engine 2 that has an inlet plenum 4 coupled to a compressor 6 by way of an inlet bell-mouth 8 according to the prior art. Figure 2 is an end view of the inlet bell-mouth 8 that couples the inlet plenum 4 to the compressor 6 for the gas turbine engine 2 shown in Figure 1. The inlet plenum 4 allows ambient air to pass through a plurality of inlet air apertures 10. A compressor shaft 12 rotates a compressor impeller 14 within a compressor shroud 16 to suck air within the inlet plenum 4 into a generally axial impeller inlet 18, compress it and discharge compressed air from a generally radial compressor outlet 20.

A plurality of shroud-bleed apertures 22 penetrate through the compressor shroud 16 somewhat downstream of the impeller inlet 18 to allow a certain proportion of compressed air to escape from the compressor shroud 16. This compressed air normally recirculates back through the inlet plenum 4 by way of a plurality of bell-mouth apertures 24 that penetrates the bell-mouth 8. Under certain operating conditions, reverse air flow may flow from the inlet plenum 4 through the bell-mouth apertures 24 and into the shroud-bleed apertures 22. Such air flow entering through the shroud-bleed apertures 22 into compressor passages between blades of the compressor impeller 14 accelerates from virtually zero velocity to blade-tip velocity. Consequently, the bulk of any particles present within this reverse shroud-bleed air flow will collide with rotating impeller blade tips of the compressor impeller 14 due to particle inertia, thereby giving rise to blade erosion or damage of the compressor impeller 14. Line 26 represents a possible path of typical particles that may find their way from the inlet plenum 2 into the shroud bleed apertures 22 in this manner.

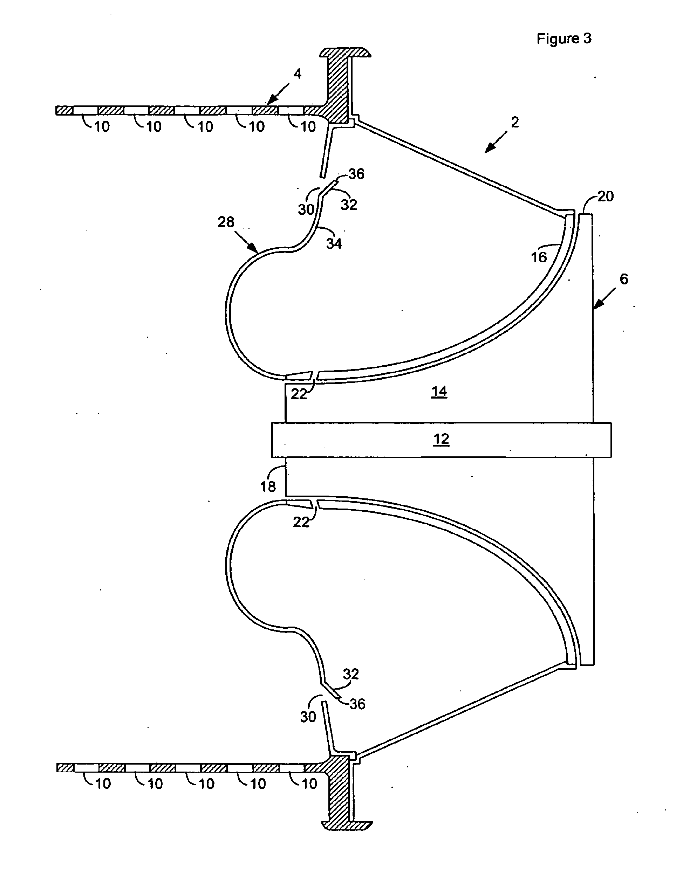

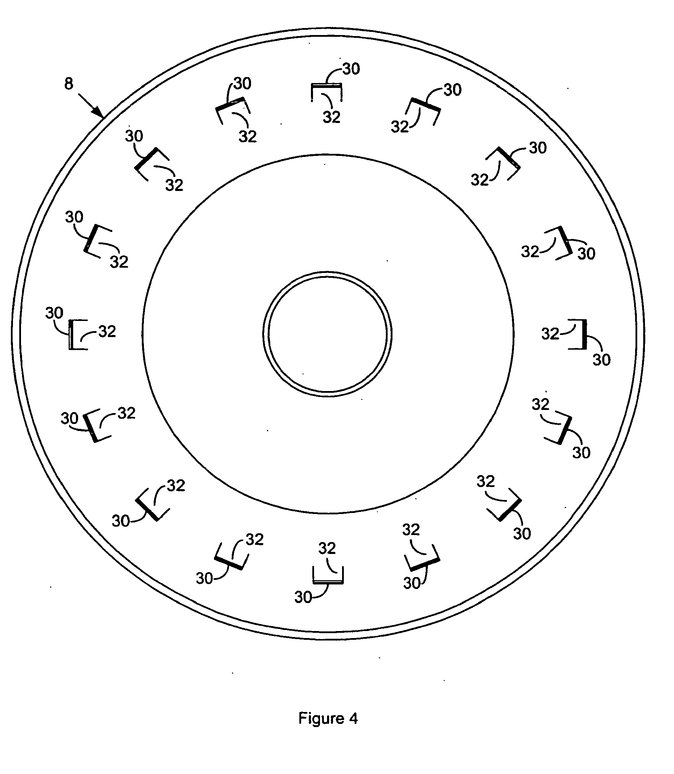

Figure 3 is a partial cut-away side view of a gas turbine engine 2 that has an inlet plenum 4 coupled to a compressor 6 by way of an inlet bell-mouth 28 according to a first possible embodiment of the invention. Figure 4 is an end view of the inlet bell-mouth 28 that couples the inlet plenum 4 to the compressor 6 for the gas turbine engine 2 shown in Figure 3 according to a possible embodiment of the invention. According to this embodiment, the inlet bell-mouth 28 has a plurality of bell-mouth apertures 30. Each bell-mouth aperture 30 has an associated particle-deflecting baffle or louvre 32 along a compressor side 34 of the inlet bell-mouth 28. In one possible embodiment the apertures 30 have a generally rectangular shape. Each baffle 32 extends from the compressor side 34 of the inlet bell-mouth 28 to an outlet end 36.

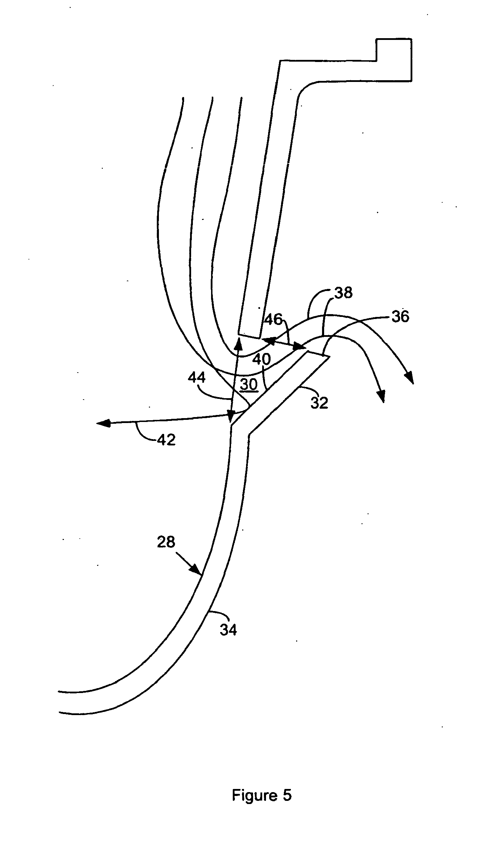

Figure 5 is a partial cut-away side view of the inlet bell-mouth 28 that couples the inlet plenum 4 to the compressor 6 for the gas turbine engine 2 shown in Figure 3 that shows one of the bell-mouth apertures 30 with its associated baffle 32 in detail. Lines 38 represent streamlines of reverse air flow through the bell-mouth aperture 30 and associated baffle 32. Curvature of the streamlines 38 increases significantly as the acceleration of the reverse air flow increases from inside the inlet plenum 4 toward the bell-mouth aperture 30. The reverse air flow streamlines 38 penetrate the bell-mouth aperture 30 and bend around an inner surface 40 of the baffle 32 to a degree that any particle with a path that initially follows the reverse air flow, as represented by line 42, can no longer do so due to its inertia. The baffle 32 thereby forces the particlé out of the reverse air flow and it deflects off of the baffle 32 back into the inlet plenum 4 downstream of the inlet air apertures 10.

Thus, the baffle 32 bends the reverse air flow to an extent that particles within the reverse airflow remain within the inlet plenum 4. It is possible to optimise the height H of the bell-mouth aperture 30, as represented by line 44, and the length L between the inlet side 34 of the inlet bell-mouth 28 and the outlet end 36 of the baffle 32, as represented by a line 46, to effectively eliminate ingestion of particles in this manner that are larger than a given size.

Although each baffle 32 may have a generally rectangular or wedge-like shape that extends from the compressor side 34 of the inlet bell-mouth 28 to the outlet end 36 of the baffle 32, alternatively each baffle 32 may have different or more complex shapes that perform the same function. For instance, the inner surface 40 of each baffle 32 may be generally curvilinear rather than generally flat as shown in Figure 5. Each bell-mouth aperture 30 may also have a variety of shapes, such as generally triangular or semicircular, in which case each associated baffle 32 may have a corresponding shape, such as a generally truncated cone or cup-like shape that extends from the compressor side 34 of the inlet bell-mouth 28. Finally, each baffle 32 may comprise a plurality of inner surfaces 40 that deflects particles in the reverse air flow stream back into the inlet plenum 4.

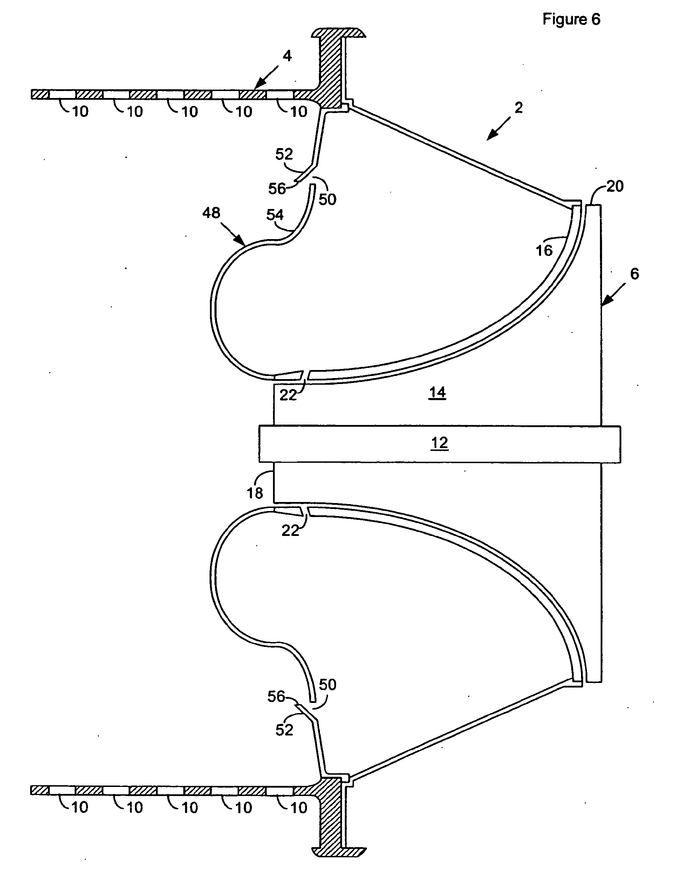

Figure 6 is a partial cut-away side view of a gas turbine engine 2 that has an inlet plenum 4 coupled to a compressor 6 by way of an inlet bell-mouth 48 according to a second possible embodiment of the invention. It is similar in appearance to the inlet bell-mouth 28 shown in Figure 3, but it has a plurality of bell-mouth apertures 50. Each bell-mouth aperture 50 has an associated particle-deflecting baffle or louvre 52 along an inlet side 54 of the inlet bell-mouth 48. In one possible embodiment the apertures 50 have a generally rectangular shape. Each baffle 52 extends from the inlet side 54 of the inlet bell-mouth 48 to an inlet end 56.

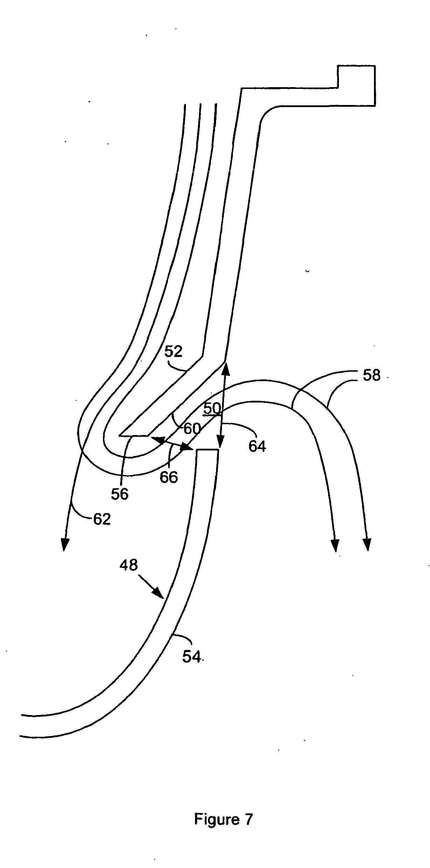

Figure 7 is a partial cut-away side view of the inlet bell-mouth 48 that couples the inlet plenum to the compressor for the gas turbine engine shown in Figure 6 that shows one of the bell-mouth apertures 50 with its associated baffle 52 in detail. Lines 58 represent streamlines of reverse air flow through the bell-mouth aperture 50 and associated baffle 52. Curvature of the streamlines 58 increases significantly as the acceleration of the reverse air flow increases from inside the inlet plenum 4 toward the bell-mouth aperture 50. The reverse air flow streamlines 58 penetrate the bell-mouth aperture 50 and bend around an inner surface 60 of the baffle 52 to a degree that any particle with a path that initially follows the reverse air flow, as represented by line 62, can no longer do so due to its inertia. The baffle 52 thereby forces the particle out of the reverse air flow and it then continues its path within the inlet plenum 4.

Thus, the baffle 52 bends the reverse air flow to an extent that particles within the reverse airflow remain within the inlet plenum 4. Again, it is possible to optimise the height H of the bell-mouth aperture 50, as represented by line 64, and the length L between the inlet side 54 of the inlet bell-mouth 48 and the inlet end 56 of the baffle 52, as represented by line 66, to effectively eliminate ingestion of particles in this manner that are larger than a given size.

Once again, although each baffle 52 may have a generally rectangular or wedge-like shape that extends from the inlet side 54 of the inlet bell-mouth 48 to the inlet end 56 of the baffle 52, alternatively each baffle 52 may have different or more complex shapes that perform the same function. For instance, the inner surface 60 of each baffle 52 may be generally curvilinear rather than generally flat as shown in Figure 7. Each bell-mouth aperture 50 may also have a variety of shapes, such as generally triangular or semicircular, in which case each associated baffle 52 may have a corresponding shape, such as a generally truncated cone or cup-like shape that extends from the inlet side 54 of the inlet bell-mouth 48. Finally, each baffle 52 may comprise a plurality of inner surfaces 60 that separate particles out of the reverse air flow stream so that they remain within the inlet plenum 4.

Any embodiment of the invention, such as the inlet bell-mouth 28 or the inlet bell-mouth 48 hereinbefore described, may comprise a stamping or weldment, such as of sheet metal, or a moulding, such as of plastic or a composite material. The described embodiments of the invention are only illustrative implementations of the invention wherein changes and substitutions of the various parts and arrangement thereof are within the scope of the invention as set forth in the attached claims.

## Claims

1. An inertial particle separator (IPS) for an inlet bell-mouth (28, 48) that couples an inlet air plenum (4) to a compressor (6) in a gas turbine engine (2), wherein the inertial particle separator removes air particles within reverse air flow passing through at least one bell-mouth aperture (30, 50) in the inlet bell-mouth (28, 48) into shroud bleed apertures (22) in a shroud (16) for the compressor (6), **characterised by**:
at least one baffle (32, 52) that protrudes from each bell-mouth aperture (30, 50) positioned to bend a reverse air flow stream (38, 58) through the bell-mouth aperture (30, 50) to a degree that forces particles out of the reverse air flow stream (38, 58) and into the inlet air plenum (4).

2. An inertial particle separator according to claim 1, wherein each baffle (52) protrudes from an inlet side of the bell-mouth (48).

3. An inertial particle separator according to claim 2, wherein each bell-mouth aperture (50) has a height H and each associated baffle (52) has a length L between an inlet side of the inlet bell-mouth (48) and an inlet end (56) of the baffle (52), with the height H and the length L optimised to force particles out of the reverse air flow stream (58) and into the inlet air plenum (4) that are larger than a given size.

4. An inertial particle separator according to claim 1, wherein each baffle (32) protrudes from a compressor side of the bell-mouth (28).

5. An inertial particle separator according to claim 4, wherein each bell-mouth aperture (30) has a height H and each associated baffle (32) has a length L between the compressor side of the inlet bell-mouth (28) and the outlet end (36) of the baffle (32), with the height H and the length L optimised to force particles out of the reverse air flow stream (38) and into the inlet air plenum (4) that are larger than a given size.

6. An inertial particle separator according to any preceding claim, wherein each bell-mouth aperture (30, 50) is generally rectangular and each associated baffle (32, 52) has a generally wedge-like shape.

7. An inertial particle separator according to any of claims 1 to 5, wherein each bell-mouth aperture (30, 50) is generally triangular and each associated baffle (32, 52) has a generally truncated cone-like shape.

8. An inertial particle separator according to any of claims 1 to 5, wherein each bell-mouth aperture (30, 50) is generally semicircular and each associated baffle (32, 52) has a generally cup-like shape.

9. An inertial particle separator according to any of claims 1 to 8, wherein each inner surface (40, 60) of each baffle (32, 52) is generally flat.

10. An inertial particle separator according to any of claims 1 to 8, wherein each inner surface (40, 60) of each baffle (32, 52) is generally curvilinear.

11. An inertial particle separator according to any preceding claim, wherein each baffle (32, 52) has a plurality of the inner surfaces (40, 60).

12. An inertial particle separator according to any preceding claim, wherein the compressor (6) has an impeller (14) with an axial throat (18), a radial outlet (20) and the shroud bleed apertures (22) are downstream from the axial throat (18).

13. An air supply system for a gas turbine engine (2), comprising:
an air compressor (6) for supplying compressed air to the engine (2) comprising a compressor shroud (16) that has a plurality of shroud bleed apertures (22);
an inlet air plenum (4) that supplies air for the compressor (6);
an inlet bell-mouth (28, 48) for coupling the inlet air plenum (4) to the compressor (6) that has a plurality of bell-mouth apertures (30, 50) to allow compressed air that bleeds from the shroud bleed apertures (22) to recirculate through the inlet air plenum (4) back into the compressor (6); and
an inertial particle separator (IPS) according to any preceding claim.

14. A gas turbine engine (2) comprising an air supply system according to claim 13.

## Patentansprüche

1. Trägheitsteilchenabscheider (IPS) für einen Einlasstrichter (28, 48), der einen Einlassluftraum (4) an einen Kompressor (6) in einem Gasturbinenmotor (2) koppelt, wobei der Trägheitsteilchenabscheider Luftpartikel im Rückluftstrom entfernt, der durch wenigstens eine Trichteröffnung (30, 50) im Einlasstrichter (28, 48) in Ummantelungsauslauföffnungen (22) in einer Ummantelung (16) für den Kompressor (6) strömt, **gekennzeichnet durch**:
wenigstens ein Leitblech (32, 52), das aus jeder Trichteröffnung (30, 50) vorspringt und derart angeordnet ist, dass es einen Rückluftstrom (38, 58) **durch** die Trichteröffnung (30, 50) so weit ablenkt, dass Teilchen aus dem Rückluftstrom (38, 58) in den Einlassluftraum (4) getrieben werden.

2. Trägheitsteilchenabscheider nach Anspruch 1, wobei jedes Leitblech (52) von einer Einlassseite des Trichters (48) vorspringt.

3. Trägheitsteilchenabscheider nach Anspruch 2, wobei jede Trichteröffnung (50) eine Höhe H aufweist und jedes zugeordnete Leitblech (52) eine Länge L zwischen einer Einlassseite des Einlasstrichters (48) und einem Einlassende (56) des Leitblechs (52) aufweist, wobei die Höhe H und die Länge L dazu optimiert sind, Teilchen, die größer als eine bestimmte Größe sind, aus dem Rückluftstrom (58) in den Einlassluftraum (4) zu treiben.

4. Trägheitsteilchenabscheider nach Anspruch 1, wobei jedes Leitblech (32) von einer Kotnpressorseite des Trichters (28) vorspringt.

5. Trägheitsteilchenabscheider nach Anspruch 4, wobei jede Trichteröffnung (30) eine Höhe H aufweist und jedes zugeordnete Leitblech (32) eine Länge L zwischen der Kompressorseite des Einlasstrichters (28) und dem Auslassende (36) des Leitblechs (32) aufweist, wobei die Höhe H und die Länge L dazu optimiert sind, Teilchen, die größer als eine bestimmte Größe sind, aus dem Rückluftstrom (38) in den Einlassluftraum (4) zu treiben.

6. Trägheitsteilchenabscheider nach einem der vorangehenden Ansprüche, wobei jede Trichteröffnung (30, 50) allgemein rechteckig ist und jedes zugeordnete Leitblech (32, 52) eine allgemein keilartige Form aufweist.

7. Trägheitsteilchenabscheider nach einem der Ansprüche 1 bis 5, wobei jede Trichteröffnung (30, 50) allgemein dreieckig ist und jedes zugeordnete Leitblech (32, 52) eine allgemein kegelstumpfartige Form aufweist.

8. Trägheitsteilchenabscheider nach einem der Ansprüche 1 bis 5, wobei jede Trichteröffnung (30, 50) allgemein halbkreisförmig ist und jedes zugeordnete Leitblech (32, 52) eine allgemein becherartige Form aufweist.

9. Trägheitsteilchenabscheider nach einem der Ansprüche 1 bis 8, wobei jede Innenfläche (40, 60) jedes Leitblechs (32, 52) allgemein flach ist.

10. Trägheitsteilchenabscheider nach einem der Ansprüche 1 bis 8, wobei jede Innenfläche (40, 60) jedes Leitblechs (32, 52) allgemein gekrümmt ist.

11. Trägheitsteilchenabscheider nach einem der vorangehenden Ansprüche, wobei jedes Leitblech (32, 52) eine Mehrzahl von Innenflächen (40, 60) aufweist.

12. Trägheitsteilchenabscheider nach einem der vorangehenden Ansprüche, wobei der Kompressor (6) ein Flügelrad (14) mit einem axialen Hals (18), einen radialen Auslass (20) aufweist und die Ummantelungsauslauföffnungen (22) dem axialen Hals (18) nachgeordnet sind.

13. Luftzuführsystem für einen Gasturbinenmotor (2), umfassend:
einen Luftkompressor (6) zum Zuführen von verdichteter Luft zu dem Motor (2), umfassend eine Kompressorummantelung (16), die eine Mehrzahl von Ummantelungsauslauföffnungen (22) aufweist;
einen Einlassluftraum (4), der Luft für den Kompressor (6) zuführt;
einen Einlasstrichter (28, 48) zum Koppeln des Einlassluftraums (4) an den Kompressor (6), der eine Mehrzahl von Trichteröffnungen (30, 50) aufweist, um es verdichteter Luft, die aus den Ummantelungsauslauföffnungen (22) gelangt, wieder durch den Einlassluftraum (4) und zurück in den Kompressor (6) zu zirkulieren; und
einen Trägheitsteilchenabscheider (IPS) nach einem der vorangehenden Ansprüche.

14. Gasturbinenmotor (2), umfassend ein Luftzuführsystem nach Anspruch 13.

## Revendications

1. Séparateur de particules à inertie (IPS) destiné à un pavillon d'entrée (28, 48) qui couple une chambre à air d'entrée (4) à un compresseur (6) dans un moteur à turbine à gaz (2), le séparateur de particules à inertie éliminant des particules d'air au sein de l'écoulement inversé d'air traversant au moins une ouverture de pavillon (30, 50) dans le pavillon d'entrée (28, 48) dans des ouvertures (22) de purge de coiffe dans une coiffe (16) destinée au compresseur (6), **caractérisé par** :
au moins un déflecteur (32, 52) qui fait saillie depuis chaque ouverture de pavillon (30, 50) positionné pour courber un courant inversé de flux d'air (38, 58) à travers l'ouverture de pavillon (30, 50) à un degré qui force les particules à sortir du courant inversé de flux d'air (38, 58) et dans la chambre à air d'entrée (4).

2. Séparateur de particules à inertie selon la revendication 1, dans lequel chaque déflecteur (52) fait saillie à partir d'un côté d'entrée du pavillon (48).

3. Séparateur de particules à inertie selon la revendication 2, dans lequel chaque ouverture de pavillon (50) a une hauteur H et où chaque déflecteur associé (52) a une longueur L entre un côté d'entrée du pavillon d'entrée (48) et une extrémité terminale (56) du déflecteur (52), alors que la hauteur H et la longueur L sont optimisées pour forcer les particules à sortir du courant inversé de flux d'air (58) et à entrer dans la chambre à air d'entrée (4) qui sont plus grands qu'une dimension donnée.

4. Séparateur de particules à inertie selon la revendication 1, dans lequel chaque déflecteur (32) fait saillie à partir d'un côté compresseur du pavillon (28).

5. Séparateur de particules à inertie selon la revendication 4, dans lequel chaque ouverture de pavillon (30) a une hauteur H et où chaque déflecteur associé (32) a une longueur L entre le côté compresseur du pavillon d'entrée (28) et l'extrémité de sortie (36) du déflecteur (32) alors que la hauteur H et la longueur L sont optimisées pour forcer les particules à sortir du courant inversé de flux d'air (38) et dans la chambre à air d'entrée (4), qui dépassent une taille donnée.

6. Séparateur de particules à inertie selon l'une quelconque des revendications précédentes, dans lequel chaque ouverture de pavillon (30, 50) est généralement rectangulaire et où chaque déflecteur associé (32, 52) a globalement une forme de coin.

7. Séparateur de particules à inertie selon l'une quelconque des revendications 1 à 5, dans lequel chaque ouverture de pavillon (30, 50) est généralement triangulaire et où chaque déflecteur associé (32, 52) a une forme globalement de cône tronqué.

8. Séparateur de particules à inertie selon l'une quelconque des revendications 1 à 5, dans lequel chaque ouverture de pavillon (30, 50) est généralement semi-circulaire et où chaque déflecteur associé (32, 52) a globalement une forme de godet.

9. Séparateur de particules à inertie selon l'une quelconque des revendications 1 à 8, dans lequel chaque surface intérieure (40, 60) de chaque déflecteur (32, 52) est globalement plane.

10. Séparateur de particules à inertie selon l'une quelconque des revendications 1 à 8, dans lequel chaque surface intérieure (40, 60) de chaque déflecteur (32, 52) est globalement curviligne.

11. Séparateur de particules à inertie selon l'une quelconque des revendications précédentes, dans lequel chaque déflecteur (32, 52) contient une pluralité de surfaces internes (40, 60).

12. Séparateur de particules à inertie selon l'une quelconque des revendications précédentes, dans lequel le compresseur (6) contient une roue 14) dotée d'une gorge axiale (18), une sortie radiale (20) et où les ouvertures (22) de purge de coiffe se trouvent en aval de la gorge axiale (18).

13. Système d'alimentation en air destiné à un moteur de turbine à gaz (2), comprenant :
un compresseur d'air (6) permettant de fournir de l'air comprimé au moteur (2) comprenant une coiffe (16) de compresseur qui contient un ensemble d'ouvertures (22) de purge de coiffe ;
une chambre à air d'entrée (4) qui introduit de l'air pour le compresseur (6) ;
un pavillon d'entrée (28, 48) servant à coupler la chambre à air d'entrée (4) au compresseur (6) qui contient un ensemble d'ouvertures de pavillon (30, 50) pour permettre à l'air comprimé qui provient des ouvertures (22) de purge de coiffe de revenir en circulation à travers la chambre à air d'entrée (4) pour revenir dans le compresseur (6) ; et
un séparateur de particules à inertie (IPS) selon l'une quelconque des revendications précédentes.

14. Moteur de turbine à gaz (2) comprenant un système d'alimentation en air selon la revendication 13.
